# EUROPÄISCHE PATENTSCHRIFT

(11) **EP 0 526 697 B1**
(45) Veröffentlichungstag und Bekanntmachung des Hinweises auf die Patenterteilung: **24.07.1996**
(21) Anmeldenummer: 92106574.4
(22) Anmeldetag: 16.04.1992
(51) Int. Cl.: C03B 37/10, C03B 1/02, C03B 37/16, B09B 3/00

(54) **Verfahren und Anlage zum Behandeln von Mineralwolleabfällen**
Method and apparatus for treating mineral wool wastes
Procédé et appareil pour le traitement de déchets de laine minérale

(30) Priorität: 05.07.1991 DE 4122334
(43) Veröffentlichungstag der Anmeldung: 10.02.1993
(73) Patentinhaber: HUMBOLDT WEDAG ZAB GmbH, D-06847 Dessau (DE)
(72) Erfinder: Heinelt, Wolfgang, O-4500 Dessau (DE)
(74) Vertreter: Bürger, Peter, PAss. Dipl.-Ing.

(56) Entgegenhaltungen:
- EP-A- 0 027 277
- EP-A- 0 039 628
- EP-A- 0 115 817
- WO-A-92/04289
- GB-A- 1 489 797
- SE-A- 0 205 247
- US-A- 3 788 832
- US-A- 4 287 142
- US-A- 4 617 045
- US-A- 4 720 295
- DATABASE WPI Section Ch, Week 37, Derwent Publications Ltd., London, GB; Class L02, AN 89-266670 & JP-A-01 192 743

## Beschreibung

Die Erfindung betrifft ein Verfahren zur Behandlung von Mineralwolle-Abfaellen, die bei der Herstellung von Mineralwolle und Mineralwolle-Produkten entstehen, sowie eine Anlage zur Durchfeuhrung das Verfahrens.

Bei der Herstellung von Mineralwolle bzw. Gesteinswolle usw. sowie bei deren Weiterverarbeitung zu beispielsweise Isoliermatten, Geweben usw., fallen erhebliche Mengen an Abfaelle an, deren Weiterverarbeitung bzw. Wiederaufarbeitung, d,h. Rueckfuehrung in den Mineral- bzw. Gesteinswolle-Herstellungsprozess, ohne zusaetzliche Behandlung nicht moeglich ist. Die Mineralwolle-Abfaelle wuerden im Schmelzofen zusammenbacken und somit ein Durchstroemen von Luft und Rauchgasen durch die Charge des Ofens verhindern. Es wuerden erhebliche Stoerungen beim Schmelzprozesz auftreten. Somit blieb als einzige Loesung die Langzeitdeponie dieser Abfaelle auf einer Halde.

Weil Mineral- bzw. Gesteinswolle verwitterungsresistent und auch biologisch nicht abbaubar ist, belasten deren Abfaelle die Umwelt. Sie sind sogar dahingehend gesundheitsschaedigend, weil die feinen und leichten Mineralwollefasern vom Wind hinweggetragen werden und ueber die Atemwege und die Haut in menschliche und tierische Koerper eindringen und zu Erkrankungen fuehren koennen.

Zur Verwertung von Mineralwolle-Abfaellen ist es gemaesz der GB 1 489 797 bekannt, Mineralwolle-Abfaelle in zwei Stufen zu einem feinkoernigen Material aufzumahlen und dieses so zerkleinerte Material dem Schmelzprozesz zuzufuehren.

Nachteilig bei diesem Verfahren ist, das das feinkoernige Material beim Schmelzprozesz im Kupolofen zusammenbackt und somit ebenfalls ein durchstroemen der Luft und der Rauchgase durch die Charge des Ofens verhindert. Die Verwendung von feinkoernigen Rohmaterialien bewirkt auszerdem, dasz im Ofen eine zusammenhaengende Schmelze gebildet wird, waehrend es wegen der gewuenschten Durchstroemung von Luft und Rauchgasen vorgezogen wird, das ein allmaehliches Abschmelzen groeszerer Partikel von der Oberflaeche des in den Schmelzofen zugefuehrten Materials erfolgen soll. Geringe Aenderungen der Temperatur und Stroemungsmenge der Schmale wirken sich bereits negativ auf die Qualitaet der erzaugten Mineralwolle aus.

In der SE-PS 205 247 wird ein Verfahren beschrieben, indem feinkoernige Mineralwolle-Abfaelle zusammen mit einem hydraulischen Bindemittel brikettiert und anschlieszend diese Briketts wieder den Schmelzofen zugefuehrt werden. Als Beispiele von hydraulischen Bindemitteln werden Zement, Ton und Wasserglas erwaehnt.

Nachteilig hat es sich gezeigt, dasz die Druckfestigkeit derartiger Briketts bei Temperaturen von ueber 500 C zu gering ist, um zu verhindern, dasz sie zu Grus oder Pulver zerfallen, wobei sich das oben beschriebene unguenstige Schmelzverhalten einstellt.

Zur Erhoehung der Druckgestigkeit der Briketts werden gemaesz der US 4 720 295 und US 4 617 045 die auf ca. 20 mm zerkleinerten Mineralwolle-Abfaelle, deren Anteil an den Briketts 20 - 30 % betraegt, unter Zugabe von Zuschlagsstoffen und einem Bindemittel mittels Schwingpressen, Stampfern oder dgl. brikettiert. Die Aushaertung der Briketts erfolgt unter Verwendung der Abwaerme des Schmelzprozesses. Als Zuschlagsstoffe werden Zementofenstaub, Bodenaschen, Hochofenschlacke und aehnliches verwendet.

Der Nachteil dieses Verfahrens besteht darin, das bei Verwendung eines Bindemittels oder eines Zuschlagstoffes mit hohen Eisengehalt das Eisen aus dem Schmelzofen durch Abzapfen entfernt werden musz. Weiterhin ist nachteilig; dasz ein hoher geraetetechnischer Aufwand mit hohen Energieverbraeuchen zur Herstellung der Briketts banoatigt werden. Nachteilig ist auch; das der Mineralwolle-Abfallanteil an der Gesamtmenge der Briketts gering ist. Es werden grosze Mengen an Zuschlagsstoffe und Bindemittal benoetigt die den Schmelzprozesz einerseits zusaetzlich belasten und andererseits negativ beeinflussen.

Die Aufgabe der Erfindung besteht darin, eine Moeglichkeit zu schaffen, um Mineral- bzw. Gestinswolle-Abfaelle umweltvertraeglich zu machen oder sie in oekonomisch vertretbarer Weise dem Ausgangsprozess der Mineralwolle-Herstellung oder einem anderen Aufberietungsprozess zufuehren zu koennen.

Erfindungsgamaesz wird die Aufgabe geloest, indem die Mineralwolle-Abfaelle feingemahlan werden auf eine Korngroesze von maximal 50 % RO,090 mm. Dieses Mahlprodukt wird mit einem festen Bindemittel oder mit einer festigkeitssteigarnden Fluessigkeit, deren Anteil 4 bis 6 % zu der Gesamtmasse beträgt, vermengt und mit oder ohne Zusatz von Wasser durch Granulierung zu Granalien, in einer Groesze von 20 bis 50 mm geformt, denen im Anschlusz durch Trocknung die Feuchtigkeit bei gleichzeitigar Festigkeitssteigerung entzogen wird.

Die Feinmahlung dar Mineralwolle-Abfaelle erfolgt vorzugsweise in zwei Stufen; wobei in der ersten Stufe eine Vorzerkleinerung auf ein Korngroesze von ca. 10 mm erfolgt, waehrend in der zweiten Stufe die Feinmahlung auf die Endkorngroesze von maximal 50 % Rueckstand auf 0,090mm-Sieb erfolgt.

Als festigkeitssteigerndes festes Bindemittel kann beispielsweise Zement mit einem Anteil von 4 bis 6 Ma%, vorzugsweise 5 Ma% dem feingemahlanem Mineralwolle-Abfall beigemengt werden.

Die Granaliengroesze beträgt zwischen 20 bis 50 mm, vorzugsweise zwischen 30 bis 50 mm, denen in einer vorzugsweise bis zu drei Tage dauernden Lufttrocknung die enthaltene Feuchtigkeit bei einer parallel verlaufenden Festigkeitserhoehung entzogen wird.

Eine Variante sieht vor, das in der ersten und/oder zweiten Mahlstufe je nach Feuchtigkeitsgehalt des Minaralwolle-Abfalls eine Zwischentrocknung das Mahlproduktes erfolgt.

Die Anlage zur Durchfuehrung dieses Verfahrens ist im Anspruch 6 erwähnt.

Die Hammermuehle arbeitet hierbei mit einer Spaltweite von vorzugsweise 15 bis 20 mm, insbesondere jedoch von 18 mm.

Zur Zwischentrocynung, die abhaengiq ist von der Anfangsfeuchte des Mahlproduytes, sind die Hammermuehle und/oder die Waelzmuehle an einen Heiszgaserzeuger angeschlossen.

Die Vorteile der Erfindung bestehen darin, dasz durch die Aufarbeitung der Mineralwolle-Abfaelle zu Granalien in der vorgegebenen Groesze und Festigkeit diese vollstaendig in den Herstellungsprozesz fuer Mineralwolle zurueckgefuehrt werden koennen. Nur in der vorgegebenen Groesze ist es moeglich, die Mineralwolle-Granalien dem Schmelzprozess zuzufuehren, in dem die Ausgangsprodukte fuer die Mineralwolle erschmolzen werden, ohne diesen negativ zu beeinflussen.

Die Folge hiervon ist, dasz kuenftig alle anfallenden Mineralwolle-Abfaelle sofort wieder aufbereitet und vorhandene Abfall-Halden systematisch abgebaut werden koennen.

Ein weiterer Vorteil besteht darin, dasz durch die Feinmahlung alle im Mahlgut enthaltenen Bestandteile gleichmaeszig verteilt werden.

Die Erfindung wird an einem Ausfuehrungsbeispiel naeher erlaeutert. Die zugehoerige Zeichnung zeigt als Schema in
- Fig.1: eine Mahlanlage ohne Zwischentrocknung;
- Fig.2: eine Mahlanlage mit Zwischentrocknung in der Waelzmuehle.

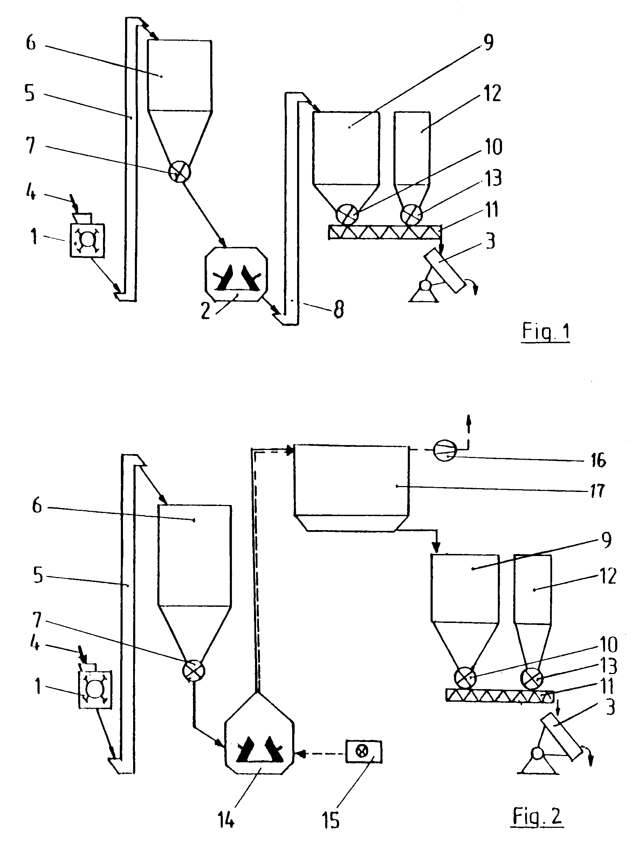

In Fig.1 sind in Reihe geschaltet eine Hammermuehle 1, eine Federrollenmuehle 2 und ein Granulierteller 3. Die von Eisenteile befreiten Mineralwolle-Abfaelle werden der Hammermuehle bei 4 aufgegeben. In ihr werden sie auf ca 10 mm Teilchengroesze vorzerkleinert und ueber ein Becherwerk 5 dem Muehlenaufgabebunker 6 zugefuehrt. Aus diesem Muehlenaufgabebunker 6 werden die vorzerkleinerten Mineralwolle-Abfaelle ueber einen Zellenradaufgeber 7 der Federrollenmeuhle 2 dosiert aufgegeben. Das auf eine Feinheit von 50 % Rueckstand auf einem Sieb mit 0,090 mm feinzerkleinerte Mahlgut wird mittels Schwerkraft aus der Federrolenmuehle 2 ausgetragen und mittels Becherwerk 8 in den Feingutbunker 9 aufgegeben. Ueber Zellenradaufgeber 10 wird das Feingut dosiert abgezogen und mittels Schneckenfoerderer 11 dem Granulierteller 3 aufgegeben. Im Schneckenfoerderer 11 erfolgt die Vermischung mit einem festen Bindemittel, z.B. Zement. Dieser befindet sich im Zuschlagstoffbunker 12 und wird aus diesem mittels eines Zellenradaufgebers 13 dosiert in der Menge abgezogen, das er in einer Menge von ca 5 Ma% dem im Schneckenfoerderer 11 bewegtem Feingut zugemischt wird.

Auf dem Granulierteller 3 wird das Gemisch zu Granalien in einer Groesze von 20 bis 50 mm geformt, wobei gegebenenfalls etwas Wasser beigemengt werden kann. Die den Granulierteller verlassenden Granalien werden anschlieszend bis zu 3 Tage an der Luft bei gleichzeitiger Verfestigung getrocknet. Die Dauer der Trocknung ist zur Erreichung einer ausreichenden Festigkeit notwendig.

In Fig. 2 ist eine Mahlanlage dargestellt, in der als Feinmuehle ein Federrollenmuehle 14 mit Luftstromaustrag eingesetzt ist, die mit Zwischentrocknung des Mahlgutes in der zweiten Stufe arbeitet. Zu diesem Zweck ist der Federrollenmuehle 14 ein Heiszgaserzeuger 15 zugeordnet. Der Materialaustrag aus der Federrollenmuehle erfolgt mittels Gasstrom, der durch den Ventilator 16 erzeugt wird. Der mit Fertiggut beladene Transportgasstrom gelangt in die Entstaubungsanlge 17,in der das Mahlgut aus dem Gasstrom ausgeschieden wird.

Das abgeschiedene Fertiggut aus der Entstaubungsanlage 17 gelangt ueber den Schneckenfoerderer 11 in den Feingutbunker 9 und von hier, nach Zumischung des festen Bindemittels aus dem Zuschlagstoffbunker 12, auf den Granulierteller 3.

### Aufstellung der verwendeten Bezugszeichen

- 1: Hammermuehle
- 2: Federrollenmuehle
- 3: Granulierteller
- 4: Materialaufgabe auf 1
- 5: Becherwerk
- 6: Muehlenaufgabebunker
- 7: Zellenradaufgeber
- 8: Becherwerk
- 9: Feingutbunker
- 10: Zellenradaufgeber
- 11: Schneckenfoerderer
- 12: Zuschlagstoffbunker
- 13: Zellenradaufgeber
- 14: Federrollenmuehle
- 15: Heiszgaserzeuger
- 16: Ventilator
- 17: Entstaubungsanlage

## Patentansprüche

1. Verfahren zur Behandlung von Mineralwolle-Abfällen, wobei die Mineralwolle-Abfälle in zwei Stufen auf eine Endkorngröße von 0,090 mm bei einem Siebrückstand gleich kleiner 50 % feingemahlen werden, gekennzeichnet **dadurch,** daß
a) dieses Mahlprodukt mit einem festen Bindemittel oder einer festigkeitssteigernden Flüssigkeit, deren Anteil 4 bis 6 % an der Gesamtmasse beträgt, vermischt wird;
b) dieses Gemisch mit oder ohne Zusatz von Wasser durch Granulierung zu Granalien mit einer Größe von 20 bis 50 mm geformt werden;
c) diese Granalien getrocknet werden.

2. Verfahren nach Anspruch 1, gekennzeichnet **dadurch,** daß in der ersten Mahlstufe eine Vorzerkleinerung auf eine Korngröße von ca. 10 mm und in der zweiten Mahlstufe die Feinmahlung auf Endfeinheit erfolgt.

3. Verfahren nach Anspruch 1, gekennzeichnet **dadurch,** daß dem Mahlprodukt als Bindemittel vor der Formgebung Zement beigemischt wird, dessen Anteil an der Gesamtmasse vorzugsweise 5 % beträgt.

4. Verfahren nach Ansprch 1, gekennzeichnet **dadurch,** daß die Trocknung der Granalien bei gleichzeitiger Verfestigung eine Lufttrocknung bis zu 3 Tage ist.

5. Verfahren nach Anspruch 1, gekennzeichnet **dadurch,** daß eine Zwischentrocknung des Mahlproduktes in der zweiten und/oder ersten Mahlstufe erfolgt.

6. Anlage zur Behandlung von Mineralwolle-Abfälle unter Verwendung einer zweistufigen aus Hammer- und Federrollen mühle bestehenden Mahlanlage, gekennzeichnet **dadurch**, daß der zweistufigen Mahlanlage eine Fördereinrichtung, ein Becherwerk (8), und ein Feingutbunker (9) mit Zellenradaufgeber (10) nachgeschaltet sind und der Zellenradaufgeber (10) und ein Zellenradaufgeber (13) des Zuschlagstoffbunkers (12) in einen Schneckenförderer (11) münden dem ein Granulierteller (3) nachgeschaltet ist, wobei die im Granulierteller (3) entstandenen Granalien danach einer Lufttrocknung unterworfen werden, und daß die erste Mahlstufe durch eine Hammermühle (1) und die zweite Mahlstufe durch eine Federrollenmühle (2) gebildet werden.

7. Anlage nach Anspruch 6, gekennezeichnet **dadurch,** daß die Hammermühle (1) mit einer Spaltweite von 15 bis 20 mm vorzugsweise 18 mm, arbeitet.

8. Anlage nach den Ansprüchen 6 und 7, gekennzeichnet **dadurch**, daß Hammermühle (1), Federrollenmühle (2) und Granulierteller (3) in Reihe geschaltet sind.

9. Anlage nach den Anspruchen 6 bis 8, gekennzeichnet **dadurch**, daß die Mühle der ersten und/oder zweiten Mahlstufe an einen Heißgaserzeuger (15) angeschlossen ist.

## Claims

1. Process to treat mineral wool waste being finely ground in two steps to a final particle size of 0.090 mm with a residue of ≦ 50 %, characterized in that
a) this ground produce is mixed with a solid binder or a strength-increasing liquid the portion of which, related to the total mass, amounts to 4 to 6 %;
b) this mix is formed to nodules of 20 to 50 mm in size, with or without the addition of water;
c) these nodules are dried.

2. Process of claim 1, characterized in that a coarse reduction takes place in the first grinding stage to a grain size of approx. 10 mm and that the fineness of finished product is achieved in the second grinding stage by fine grinding.

3. Process of claim 1, characterized in that cement, as binder, is added to the ground product before shaping, the portion of the cement, related to the total mass, preferably amounting to 5 %.

4. Process of claim 1, characterized in that the drying of the nodules, with simultaneous solidification, is air drying up to 3 days.

5. Process of claim 1, characterized in that intermediate drying of the ground product takes place in the second and/or first grinding stage.

6. Plant to treat mineral wool waste using a two-stage grinding plant consisting of a hammer mill and a spring-loaded roller mill, characterized in that conveying equipment, a bucket elevator (8) and a fines bin (9) including a star feeder (10) follow the two-stage grinding plant, and that the star feeder (10) and the star feeder (13) of the aggregate bin (12) discharge into a screw conveyor (11) followed by a pan pelletizer (3) whereas the nodules generated in the pan pelletizer (3) are subject to air drying, and that the first grinding stage consists of a hammer mill (1) and the second one of a spring-loaded roller mill (2).

7. Plant of claim 6, characterized in that the hammer mill (1) operates with a width of discharge opening of 15 to 20 mm, preferably 18 mm.

8. Plant of claims 6 and 7, characterized in that the hammer mill (1), the spring-loaded roller mill (2) and the pan pelletizer (3) are connected in series.

9. Plant of claims 6 through 8, characterized in that the mill of the first and/or second grinding stage is connected to a hot gas generator (15).

## Revendications

1. Procédé conçu pour la préparation de déchets de laine minérale, en broyant finement en 2 étages les déchets de laine minérale jusqu'à ce que la granulométrie finale de 0,090 mm soit atteinte à un refus de crible moins que 50 %, **caractérisé en ce que**
a) ce produit de broyage est mélangé avec un liant solide ou un liquide augmentant la résistance dont le pourcentage est de 4-6 % par rapport à la masse totale;
b) ce mélange avec ou sans addition de l'eau est transformé par granulation en granules dont la grosseur est de 20-50 mm;
c) ces granules sont séchées.

2. Procédé selon la revendication 1, **caractérisé en ce qu'**au premier étage de broyage s'effectue le broyage préalable jusqu'à la grosseur du grain d'environ 10 mm, et au deuxième étage de broyage - le broyage fin, jusqu'a ce que la finesse finale soit atteinte.

3. Procédé selon la revendication 1, **caractérisé en ce qu**' au produit de broyage est ajouté du ciment en tant que liant avant le façonnage, dont le pourcentage est de préférence de 5 % par rapport à la masse totale.

4. Procédé selon la revendication 1, **caractérisé en ce que** le séchage des granules est un séchage à l'air de durée jusqu'à 3 jours à prise simultanée.

5. Procédé selon la revendication 1, **caractérisé en ce que** le séchage intermédiaire du produit de broyage s'effectue au deuxième et/ou premier étage de broyage.

6. Unité conçue pour la préparation de déchets de laine minérale en utilisant une installation de broyage à deux étages, comprenant le broyeur à marteaux et le broyeur à meules, **caractérisée en ce qu**'en aval de l'installation de broyage à deux étages sont mis l'installation de manutention, l'élévateur à godets (8) et la trémie pour la fraction fine (9) avec alimenteur à roue cellulaire (10) et que l'alimenteur à roue cellulaire (10) et l' alimenteur à roue cellulaire (13) de la trémie pour les agrégats (12) débouchent dans la vis transporteuse (11), suivie de la sole granulatrice (3), en soumettant après cela les granules formées dans la sole granulatrice (3) au séchage à l'air, et que le premier étage de broyage est constitué par le broyeur à marteaux (1) et le deuxième étage de broyage par le broyeur à meules (2).

7. Unité selon la revendication 6, **caractérisée en ce que** le broyeur à marteaux (1) travaille à une fente de 15-20 mm, de préférence de 18 mm.

8. Unité selon les revendications 6 et 7 prises ensemble, **caractérisée en ce que** le broyeur à marteaux (1), le broyeur à meules (2) et la sole granulatrice (3) sont mis en série.

9. Unité selon les revendications 6 à 8, **caractérisée en ce que** le broyeur du premier et/ou deuxième étage de broyage est raccordé au générateur de gaz à chaud (15).
